# EUROPEAN PATENT SPECIFICATION

(11) **EP 0 384 969 B1**
(45) Date of publication and mention of the grant of the patent: **25.08.1993**
(21) Application number: 89121728.3
(22) Date of filing: 24.11.1989
(51) Int. Cl.: G01N 30/08, G01N 30/20

(54) **Axially-driven valve controlled trapping assembly**
Trappingsystem mit axial getriebenem Ventil
Dispositif de piégeage avec valve à déplacement axial

(30) Priority: 27.02.1989 US 316383
(43) Date of publication of application: 05.09.1990
(73) Proprietor: Hewlett-Packard Company, Palo Alto, California 94304 (US)
(72) Inventor: Nickerson, Mark A., Landenberg, PA 19350 (US); Poole, John S., Landenberg, PA 19350 (US); Frank, Lenore G. R., Landenberg, PA 19350 (US)
(74) Representative: Schoppe, Fritz, Dipl.-Ing.

(56) References cited:
- EP-A- 0 275 933
- CH-A- 432 963
- DE-A- 2 008 145
- DE-A- 3 420 815
- US-A- 3 459 215
- US-B- 528 756
- JOURNAL OF HIGH RESOLUTION CHROMATOGRAPHY AND CHROMATOGRAPHY COMMUNICATIONS vol. 10, no. 5, May 1987, HEIDELBERG DE pages 273 - 279; A. VAN ES ET AL.: "Sample introduction in high speed capillary gas chromatography; input band width and detection limits."
- PATENT ABSTRACTS OF JAPAN vol. 9, no. 199 (P-380)(1922) 16 August 1985;& JP-A-60063461

## Description

### Background of the Invention

This invention relates to trapping assemblies for use with fluid systems and to valve means suitable for use with such assemblies as part of the process for introducing trapped solutes into instruments such as gas, liquid or supercritical fluid chromatographs that are used to measure amounts of such solutes.

The use of gas, liquid and supercritical fluid chromatographs (hereinafter collectively referred to as "chromatographs") have long been used to measure amounts of solutes in fluids. In a gas chromatograph the carrier fluid is gas, e.g., nitrogen, and in a liquid chromatograph it is a liquid, e.g., methyl alcohol. In supercritical fluid chromatographs the carrier fluid is ordinarily a gas, e.g., CO₂, which is densified with increased pressure above its critical point. The density and thus the effective solvent power of an supercritical fluid can be controlled by pressure.

It has become increasingly important to be able to measure very small, even trace, amounts of solutes in a carrier fluid. This is particularly desirable in measuring very small amounts of contaminants, such as organic chemicals, pesticides, etc., in drinking water or foods in amounts of the order of 1 ppb. In such circumstances, the amount of solute may be below the minimum detectable quantity (MDQ) for most chromatographs.

In the method and apparatus of Poole et al., U.S. Patent 4,500,432, granted February 19, 1985 there is provided a way to concentrate solutes contained in fluids before they are applied to chromatographs for analysis. In general, the technique of Poole et al. involves concentrating a solute by passing a solvent containing it through a first trapping means (e.g., a packed column) that adsorbs the solute and passes the solvent to waste, passing a fluid (e.g., a supercritical fluid) through the first trapping means to dissolve or solubilize the solute therefrom and carry it into a second trapping means, and reducing the solubility parameter of the fluid in the second trapping means. Where a supercritical fluid carries the solute, the last step can involve passing the fluid from a high pressure to a much lower pressure. This permits the fluid to escape from the second trapping means leaving the solute concentrated therein. The second trapping means can be used by itself when a vessel containing a range of materials (solids, semi-solids, liquids dispersed as a stationary phase) replaces the first trapping means.

Currently known approaches to achieve pressure drops from high pressure systems to lower pressures include: (a) static orifices which are typically holes of about 3 to 20 micrometers in diameter in thin metal foil or at the end of converging ducts, or (b) lengths of capillary tubing (e.g., 20 to 50 micrometers ID). Neither of the foregoing decouple control of pressure (and therefore density) from linear flow rate.

Often in larger systems (e.g., small pilot plant scale), conventional needle valves are used for pressure drop. These tend to suffer from large inaccessible volumes (dead volume) and inappropriately placed boundaries to the expanding stream so that sampling of high pressure fluid is not representative. Large valves also tend to suffer from poor design in getting sufficient heat into the device to balance heat lost during expansion and, thus, tend to "ice up" causing erratic flow or stoppages. Available back pressure regulators, using manually set, spring-driven control pistons, do not contain nozzle geometry for sampling with the capability of electronic control of the pressure.

(EP-A-275933) shows a trapping assembly for a chromatographic device, having a column for removing a solute component from a fluid, an inlet for introducing pressurized fluid to the assembly and valve means having a axially driven valve member and a valve seat.

The valve of this prior art trapping assembly has a valve member in the form of a cylindrical valve stem 30 having a flat lower surface for engagement with the valve seat.

The valve seat is formed by the upper end of a narrow tubing which conically diverges towards the valve seat. The lower end of the narrow tubing leads to the column. As disclosed on page 6, lines 47 to 49 and lines 56 to 57 of this reference, the valve is controlled in an on-and off-manner. In the fully opened position of the valve, the pressure drop from the high pressure side to the column is determined by the diameter and the length of the tubing, but not in any way influenced by the valve. The valve merely serves for feedback-controlling the average flow rate and the average pressure by suitably shifting the duty cycle of the control signal for actuating the valve.

The "Journal of High Resolution Chromatography and Chromatography Communications", Volume 10, No. 5, May 1987, pages 273 to 279, discloses a capillary gas chromatograph. In this prior art chromatograph, a capillary column having a small bore of less than 100 micrometers and a length exceeding 1 meter is used to achieve pressure drops from high pressure systems to the low pressure side. At the inlet of the capillary column, a microchip is arranged comprising a micromachined valve seat formed a silicon chip by etching techniques. A solenoid body having a solenoid plunger is arranged above a flat, disk-like diaphragm which can be brought into sealing contact with a valve seat having the form of a ring-like member. The valve is merely used for controlling the fluid flow to the capillary column in an on- and off-manner.

### Summary of the Invention

This invention provides axially-driven valve means which permits back pressure regulation and fast response time and which acts as a variable orifice for transmitting fluids from a high pressure region to a much lower pressure region. This invention further provides an assembly especially useful in the apparatus and method of the type described in Poole et al. since it largely overcomes the disadvantages or shortcomings of known fluid trapping assemblies suitable for use with supercritical fluids. This is accomplished by means suitable for electronic control through axially driven valve means of the expansion of pressurized fluid through an orifice expansion nozzle into a fluid trapping assembly with low dead volume having a column for trapping or accumulating a solute component of said fluid. This invention is more particularly pointed out in the appended claim 1 and is described in its preferred embodiments in the accompanying drawings and the detailed description thereof.

### Brief Description of the Drawings

FIG. 1 is a partial cross-section of a fluid trapping assembly and valve in accordance with this invention.

FIG. 2 is a partial cross-section of a valve in accordance with this invention having a flattened conical diaphragm.

FIG. 3 is a partial cross-section of a valve in accordance with this invention having a metal ball located above the diaphragm.

### Detailed Description of the Invention

Referring now to the drawings, trapping assembly 10 contains a column 12 which is filled with packing material 14. Suitable packing material includes a wide variety of materials, e.g., metal cylinders, beads, spheres or particles which can suitably be made of stainless steel, nickel, nickel-copper, nickel chrome, cobalt chrome, etc. Other packing materials are glass or resin beads, particles, etc., sintered porous metal matrix of irregular or spherical metal, or silica or bonded-phase-silica and polymeric particles, beads, etc. It is also possible that the column can be unpacked and/or have an interior coating of a polymer such as are known in the art of chromatography.

The column 12 is provided at top and bottom with suitable layers of frit 16 and 18 which can be a porous layer of stainless steel particles.

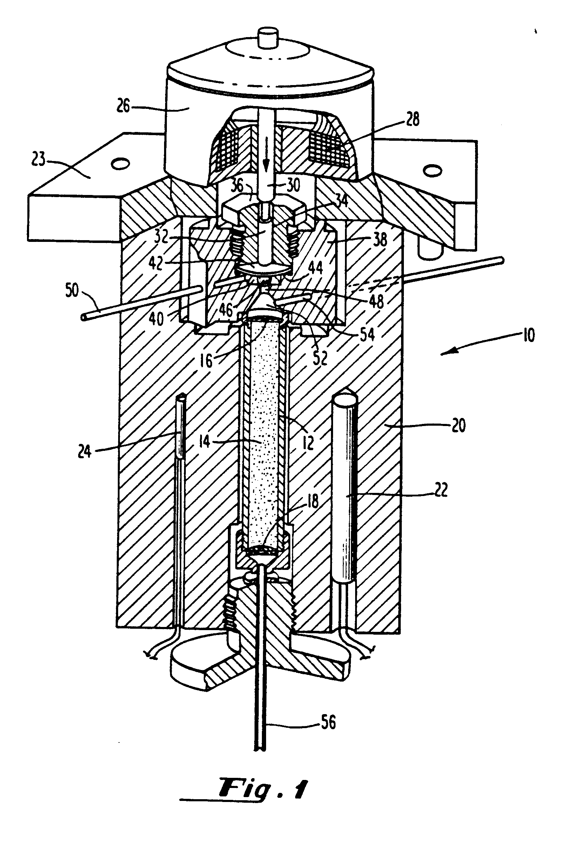

The column 12 is shown encased in housing 20 which is provided with electric heating element 22 and thermocouple 24. At the top of housing 20 is plate 23. Mounted atop plate 23 is solenoid 26 shown partially cut away in Fig. 1 revealing windings 28 and axially moving shaft 30 reactive to the electric current flowing in the solenoid 26.

Axially extending from shaft 30 is a pin 32 which extends through an axially located opening 34 in threaded bushing 36. The bushing 36 is threadably engaged in a central opening located in valve block 38 located within housing 20 atop column 12. Located within valve block 38 below the bushing 36 is valve chamber 40. At the top of valve chamber 40 is diaphragm 42 which is held in sealed engagement between the end of bushing 36 and annular shoulder 44 of the valve block 38 surrounding valve chamber 40.

The diaphragm 42 is ordinarily formed from a hard metal material. The annular edges of the pin 32 and opening 34 are rounded at the diaphragm end thereof.

Located within the valve chamber 40 in Fig. 1 is a spherical metal ball 46, e.g., a ball bearing, the apex of which is welded to the center of the bottom side of diaphragm 42. The ball 46 is adapted to engage and seal fluid exit orifice 48 located centrally at the base of valve chamber 40. The metal of the valve block at the top of orifice 48 should be softer than that of the ball 46 to permit the latter to form a seat.

Extending through the housing 20 and valve block 38 into said valve chamber 40 is inlet 50 which permits introduction of fluid at high pressure into the valve chamber 40.

At the bottom of orifice 48 is a conical diverging section 52 of the nozzle formed therefrom. It is preferred that the angle of the cone be between about 50 to 70 degrees. A design of 65 degrees has been found to be satisfactory. At one side of conical diverging section 52 a flushing port 54 is provided. At the base of column 12 is column outlet 56. Normally, flushing port 54 is closed.

Electrical actuation of solenoid 26 provides axial movement to pin 32 against diaphragm 42. When pin 32 moves downward, ball 46 seals orifice 48. When fluid under pressure flows into inlet 50, pressure is exerted on the bottom of diaphragm 42. Fluid pressures between 69 and 414 bar are typical. If the pressure on the diaphragm is sufficient, it and the ball 46 are lifted from orifice 48 and a gap between the ball and the orifice is formed. The diaphragm directs the flow of fluid through the valve chamber 40 and the gap and out through orifice 48. The diaphragm seals off the high pressure fluid from ambient pressure regions within the apparatus. The active diameter of the diaphragm may be about 5 mm and the thickness may be approximately 0.14mm and made of HAVAR cobalt-nickel-chrome alloy (although other metals such as 440C and 17-7 Ph stainless steel can be used). The 440C stainless steel ball may be 2.5mm in diameter and affixed to the diaphragm by means of brazing (although spot welding or laser welding might be employed). Orifice 48 may be about 1mm in diameter. The fluid passing through orifice 48 continues to expand in conical diverging section 52 to a region of lower pressure. If the fluid is a gas, e.g., carbon dioxide, held at temperatures and pressures above its critical point, the high density thereof increases its solubility parameter for the dissolved solute therein. When the fluid passes into the column 12 at a much lower pressure, the solute comes out of solution and is removed and collected (which includes being absorbed, or otherwise retained on the packing within the column). The fluid, e.g., carbon dioxide at lower pressure can be removed from the column through outlet 56.

Thereafter, the column can be flushed by introducing fluid through flushing port 54 and removing it through outlet 56 or the direction of flow can be reversed if desired.

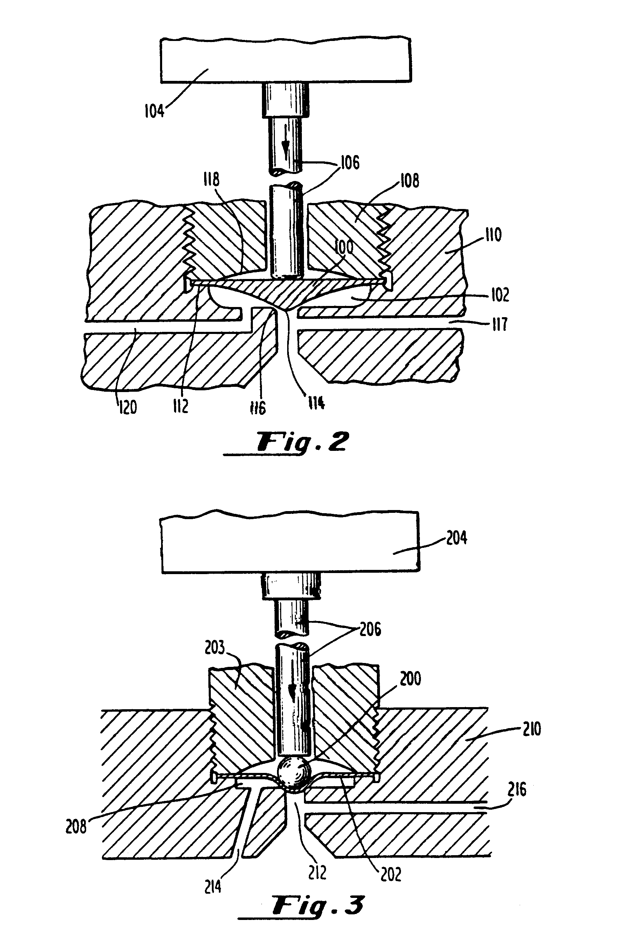

Referring now to Fig. 2, a semi-schematic arrangement of a preferred valve means of this invention is shown. The main feature of this embodiment is the use of an inverted, flattened conical diaphragm 100 within valve chamber 102. The solenoid 104, pin 106, bushing 108, valve block 110, inlet 20 and flushing port 117 are similar to those described in connection with Fig. 1.

In the valve means shown in Fig 2, the flattened conical diaphragm 100 is held in sealing engagement between bushing 108 and valve block shoulder 112 in a similar fashion to diaphragm of Fig. 1. The diaphragm 100 is mounted so that the apex 114 of the conical portion is pointed downward within valve chamber 102. The active diameter of diaphragm 100 may be about 8mm with a thickness at the outer edge similar to diaphragm 42 of Fig. 1. At the center the thickness may be about 0.9mm with an included angle of about 120° where it contacts orifice 116. The material is typically 17-7 Ph stainless steel but could also be HAVAR or 440C stainless steel. Apex 114 is adapted to engage the seat formed in the upper end of orifice 116. Again, the metal of diaphragm 100 is harder than that of the seat to provide for sealed engagement when closed.

The bottom surface 118 of bushing 108 is formed hemispherically. In case of power failure in the solenoid, the force of the fluid in inlet 120 will force diaphragm 100 upward to be held securely against surface 118 without significant deformation. Optionally, pin 106 may be secured to diaphragm 100.

Referring to Fig. 3 a valve means is shown wherein a metal ball 200 is shown located above diaphragm 202. The bushing 203, solenoid 204, pin 206, valve chamber 208, and valve block 210 are similar to those described in connection with Fig. 1. In this embodiment the pin 206 acting on and through ball 200, forces the depressed center of diaphragm 202 against the orifice 212 in sealing engagement. Diaphragm 202 is of similar geometry and material to diaphragm 42 of Fig. 1 the design may be an inversion of that in Fig. 1 so as to eliminate the need for attaching the ball to the diaphragm. The bottom surface of bushing 203 is formed hemispherically in the same manner as shown by 118 for Fig. 2 for the same purpose. Fluid inlet 214 and a flushing port 216 are also provided.

In each embodiment of valve means of this invention, the diaphragm separates high pressure fluids from ambient pressure regions, locates the means that blocks the orifice, and lifts the means that blocks the orifice in response to force from the high pressure fluid acting against the diaphragm. The valve means of this invention are especially useful in supercritical fluid trapping means described herein and especially for use in the invention of Poole et al. U.S. Patent 4,500,432. Such valves are, however, useful in any device where high pressure fluids are to be directed through a variable orifice to a region of lower pressure, and which are to be operated by electronic control (e.g., the connection between the outlet of a supercritical fluid chromatograph column and a detection means).

The valves illustrated herein are actuated by solenoid means; however, such valves can be also be axially driven by linear motors, piezo electric or magneto-strictive linear movement devices, and electrically actuated, thermally expanded linear movement devices. A function which can be achieved in accordance with this invention is the expansion of fluids and fluid mixtures from high pressures to low pressures where the range of said fluids and mixtures includes supercritical fluids, nearly critical fluids, subcritical fluids, gases and liquids. Devices of this invention may be used to maintain or control pressure and/or to sample fluid from extraction devices, chromatographs, or fluid reservoirs. One feature of the design is to allow minimal distances from the annular throat of the nozzle to possible downstream devices, e.g., detectors (like mass spectrometer inlet systems, flame ionization detectors), supersonic molecular beam formation systems, and/or effluent collection devices. Nozzle designs may also include annular-orifice, variable annular orifice, open orifice, compliant open orifices, or slit aperatures.

## Claims

1. Trapping assembly for a chromatograph, comprising:
a column (12) for removing a solute component from a fluid;
inlet means (50;120;214) for introducing said fluid under pressure into said assembly;
valve means having an axially driven valve member and a valve seat; and
pressure drop means for achieving a pressure drop of said fluid between said inlet means (50;120;214) and said column (12);
characterized in that
- said pressure drop means is formed by said valve means and a conically diverging orifice expansion nozzle (52;116;212) leading directly to said column (12);
- said valve member comprises a spheroidal valve area (46;114) and a diaphragm (42;100;202)
- said diaphragm (42;100;202) is arranged for separating said fluid under pressure from ambient pressure regions, for locating said spheroidal valve area (46;114) with respect to said valve seat; and for lifting said spheroidal valve area (46;114) from said valve seat in response to a force from said fluid under pressure acting against said diaphragm (42;100;202); and
- said valve seat is formed by the narrow end (48;116;212) of said conically diverging orifice expansion nozzle (52).

2. Trapping assembly as defined in claim 1, characterized in that
- said spheroidal valve area is formed by a metal ball (46) fixed to the diaphragm (42) located on the same side of diaphragm (42) as said fluid;
- said valve means further comprises an axially driven pin (32) for engaging said diaphragm (42) and said metal ball being adapted to be forced by said pin (32) against said orifice expansion nozzle (48, 52).

3. Trapping assembly as defined in claim 1, characterized in that
- said diaphragm (100) has a spheroidal apex (114), and
- said spheroidal valve area comprises the apex (114) of the diaphragm (100).

4. Trapping assembly as defined in claim 1, characterized in that
- said diaphragm (202) has a spherical shape;
- said valve means further comprises an axially driven pin (206);
- a metal ball (200) is arranged between the pin (206) and the diaphragm (202); and
- said metal ball (200) is located on the side of said diaphragm (202) away from said fluid, and said metal ball (200) and said diaphragm (202) being adapted to be forced by said pin (206) against said orifice expansion nozzle (212).

5. Trapping assembly as defined in one of the claims 1 to 4, characterized in that the conical shape of said expansion nozzle (52) has an angle of from about 50 to 70 degrees.

6. Trapping assembly as defined in one of the claims 1 to 5, characterized in that said valve means is solenoid driven (26; 104; 204).

7. Trapping assembly as defined in one of the claims 1 to 6, characterized in that said pin (106) is surrounded by a hemispherical surface (118) above said diaphragm (100).

8. Trapping assembly as defined in one of the claims 1 to 7, characterized by:
a flushing port (54; 117; 216) in said orifice expansion nozzle (52, 116, 212) adapted to conduct a flushing fluid into or out of said column (12) after collecting said solute in said column (12).

9. Trapping assembly as defined in claim 2, wherein said metal ball (46) is welded to said diaphragm (42).

## Patentansprüche

1. Fallenanordnung für einen Chromatographen, mit:
einer Säule (12) zum Entfernen einer gelösten Komponente von einem Fluid;
einer Einlaßeinrichtung (50; 120; 240) zum Hereinführen des Fluides unter Druck in die Anordnung;
einer Ventileinrichtung mit einem in axialer Richtung betriebenen Ventilglied und einem Ventilsitz; und
einer Druckabfalleinrichtung zum Erhalten eines Druckabfalles des Fluides zwischen der Einlaßeinrichtung (50; 120; 214) und der Säule (12);
dadurch gekennzeichnet, daß
- die Druckabfalleinrichtung durch die Ventileinrichtung und eine Expansionsdüse (52; 116; 212) mit einer sich konisch erweiternden Öffnung, welche direkt zu der Säule (12) führt, gebildet ist;
- die Ventileinrichtung einen sphäroidischen Ventilbereich (46; 114) und eine Membran (42; 100; 202) aufweist,
- die Membran (42; 100; 202) angeordnet ist, um das unter Druck stehende Fluid von Umgebungsdruckbereichen zu trennen, um den sphäroidischen Ventilbereich (46; 114) bezüglich des Ventilsitzes zu lokalisieren; und um den sphäroidischen Ventilbereich (46; 114) von dem Ventilsitz in Reaktion auf eine Kraft von dem unter Druck stehenden Fluid, welche gegen die Membran (42; 100; 202) wirkt, anzuheben; und
- der Ventilsitz durch das schmale Ende (48; 116; 212) der Expansionsdüse (52) mit der sich konisch erweiternden Öffnung gebildet ist.

2. Fallenanordnung nach Anspruch 1, dadurch gekennzeichnet, daß
- der sphäroidische Ventilbereich durch eine Metallkugel (46) gebildet ist, die an der Membran (42) befestigt ist und auf der gleichen Seite der Membran (42) wie das Fluid angeordnet ist; und
- die Ventileinrichtung ferner einen in axialer Richtung angetriebenen Stift (32) zur Eingriffnahme mit der Membran (42) und die Metallkugel umfaßt, welche dazu geeignet ist, um durch den Stift (32) gegen die Öffnungsexpansionsdüse (48; 52) gedrückt zu werden.

3. Fallenanordnung nach Anspruch 1, dadurch gekennzeichnet, daß
- die Membran (100) einen sphäroidischen Scheitel (114) hat, und
- daß der sphäroidische Ventilbereich den Scheitel (114) der Membran (100) umfaßt.

4. Fallenanordnung nach Anspruch 1, dadurch gekennzeichnet, daß
- die Membran eine kugelige Form hat;
- die Ventileinrichtung ferner einen in axialer Richtung angetriebenen Stift (206) umfaßt;
- eine Metallkugel (200) zwischen dem Stift (206) und der Membran (202) angeordnet ist; und
- die Metallkugel (200) auf der Seite der Membran (202) angeordnet ist, die von dem Fluid abgewandt ist, und die Metallkugel (200) sowie die Membran (202) dazu geeignet sind, um durch den Stift (206) gegen die Öffnungsexpansionsdüse (212) gezwängt zu werden.

5. Fallenanordnung nach einem der Ansprüche 1 bis 4, dadurch gekennzeichnet,
daß die konische Form der Expansionsdüse (52) einen Winkel zwischen ungefähr 50 und 70 Grad hat.

6. Fallenanordnung nach einem der Ansprüche 1 bis 5, dadurch gekennzeichnet,
daß die Ventileinrichtung solenoidbetätigt (26; 104; 204) ist.

7. Fallenanordnung nach einem der Ansprüche 1 bis 6, dadurch gekennzeichnet,
daß der Stift (106) von einer halbkugelförmigen Oberfläche (118) oberhalb der Membran (100) umgeben ist.

8. Fallenanordnung nach einem der Ansprüche 1 bis 7, gekennzeichnet durch:
ein Spültor (54; 117; 216) in der Öffnungsexpansionsdüse (52; 116; 212), welches dazu geeignet ist, ein Spülfluid in die Säule (12) hereinzuführen oder aus dieser herauszuführen, nachdem der gelöste Stoff in der Säule (12) gesammelt worden ist.

9. Fallenanordnung nach Anspruch 2,
bei der die Metallkugel (46) an der Membran (42) angeschweißt ist.

## Revendications

1. Dispositif de piégeage pour chromatographe, comportant:
une colonne (12) servant à séparer à partir d'un fluide un composé dissout;
un moyen d'entrée (50;120;214) destiné à l'introduction dudit fluide sous pression dans ledit dispositif;
un moyen de valve possédant un organe de valve à déplacement axial et d'un siège de valve; et
un moyen de chute de pression destiné à obtenir une chute de la pression dudit fluide entre ledit moyen d'entrée (50;120;214) et ladite colonne (12);
caractérisé en ce que
- ledit moyen de chute de pression est formé par ledit moyen de valve et une buse de détente munie d'un orifice conique divergent (52;116;212) conduisant directement à ladite colonne (12);
- ledit moyen de valve comporte une zone de valve sphéroïdale (46;114) et un diaphragme (42;100;202);
- ledit diaphragme (42;100;202) est aménagé de façon à séparer ledit fluide sous pression des zones de pression ambiante, afin de situer ladite zone de valve sphéroïdale (46;114) par rapport audit siège de valve; et à soulever ladite zone de valve sphéroïdale (46;114) dudit siège de valve en réponse à une force provenant dudit fluide sous pression agissant contre ledit diaphragme (42;100;202): et
- ledit siège de valve est formé par l'extrémité étroite (48;116;212) de ladite buse de détente munie d'un orifice conique divergent (52).

2. Dispositif de piégeage selon la revendication 1, caractérisé en ce que
- ladite zone de valve sphéroïdale est formée par une bille de métal (46) fixée au diaphragme (42) située du même côté du diaphragme (42) que ledit fluide;
- ledit moyen de valve comporte également une tige à déplacement axial (32) destinée à s'engager dans ledit diaphragme (42) et ladite bille de métal étant apte à être poussée par ladite tige (32) contre ladite buse de détente munie d'un orifice (48, 52).

3. Dispositif de piégeage selon la revendication 1, caractérisé en ce que
- ledit diaphragme (100) possède une extrémité sphéroïdale (114), et
- ladite zone de valve sphéroïdale comprend l'extrémité (114) du diaphragme (100).

4. Dispositif de piégeage selon la revendication 1, caractérisé en ce que
- ledit diaphragme (202) est de forme sphérique;
- ledit moyen de valve comprend également une tige à déplacement axial (206);
- une bille de métal (200) est aménagée entre la tige (206) et le diaphragme (202); et
- ladite bille de métal (200) est située du côté dudit diaphragme (202) éloigné dudit fluide, et ladite bille de métal (200) et ledit diaphragme (202) étant aptes à être poussés par ladite tige (206) contre ladite buse de détente munie d'un orifice (212).

5. Dispositif de piégeage selon l'une des revendications 1 à 4, caractérisé en ce que la forme conique de ladite buse de détente munie d'un orifice (52) comporte un angle d'environ 50 à 70 degrés.

6. Dispositif de piégeage selon l'une des revendications 1 à 5, caractérisé en ce que ledit moyen de valve est entraîné par un solénoïde (26;104;204).

7. Dispositif de piégeage selon l'une des revendications 1 à 6, caractérisé en ce que ladite tige (106) est entourée par une surface hémisphérique (118) située au-dessus dudit diaphragme (100).

8. Dispositif de piégeage selon l'une des revendications 1 à 7, caractérisé par:
un orifice de rinçage (54;117;216) situé dans ladite buse de détente munie d'un orifice (52;116;212), apte à introduire un fluide de rinçage dans ladite colonne (12) ou à l'évacuer de ladite colonne après que ladite substance dissoute ait été recueillie dans ladite colonne (12).

9. Dispositif de piégeage selon la revendication 2, dans lequel ladite bille de métal (46) est soudée audit diaphragme (42).
